# EUROPEAN PATENT APPLICATION

(11) **EP 4 506 653 A1**
(43) Date of publication of application: **12.02.2025**
(21) Application number: 24187540.0
(22) Date of filing: 09.07.2024
(51) Int. Cl.: G01B 3/1041, G01B 3/1056

(54) **TAPE MEASURE ASSEMBLY**

(30) Priority: 10.07.2023 US 202363525733 P
(71) Applicant: Diversified Innovations, LLC, Mount Gilead NC 27306 (US)
(72) Inventor: MEEKS, Eddie Alexander, Greensboro, NC, 27455 (US)
(74) Representative: Forresters IP LLP

(57) **Abstract**

A measuring device and assembly. The device may include a retractable measuring tape secured about a tape reel and an elongated barbed projection assembly coupled in an operative association with the measuring tape. Typically, the elongated barbed projection assembly includes a length of barbed projection having a plurality of barbs. The result is a hybrid measuring device with a plurality of barbs aligned substantially perpendicular to a longitudinal axis of the measuring tape for lock-on and alignment advantages in a variety of configurations.

## Description

This application claims the benefit of US provisional application number 63/525733, filed July 10, 2023, which is herein incorporated by reference in its entirety.

### Field of the Technology

The present disclosure relates generally to tape measures, and more particularly to improved retractable tape measure tips with enclosure devices and assemblies.

### Brief Description of the Drawings

Embodiments of the disclosure will be better understood by a reading of the Description of Embodiments along with a review of the drawings, in which:
Figure 1 is a side view of one embodiment of a measuring device according to the present disclosure in an operating position;
Figure 2 is a top perspective view of the embodiment thereof;
Figure 3 is a side view of the embodiment thereof, with elements removed for clarity;
Figure 4 is a side view of the embodiment thereof;
Figure 5 is a side view of the embodiment thereof;
Figure 6 is a top perspective view of the embodiment thereof;
Figure 7 is a top perspective view of the embodiment thereof;
Figure 8 is a top perspective view of the embodiment thereof;
Figure 9 is a side view of the embodiment thereof;
Figure 10 is a front view of the embodiment thereof;
Figure 11 is a rear view of the embodiment thereof;
Figure 12 is a side view of the embodiment thereof;
Figure 13 is an exploded view of the embodiment thereof;
Figure 14 is a front perspective view of an isolated elongated projection assembly introduced in Figure 1;
Figure 15 is a side perspective view thereof;
Figure 16 is a top perspective view thereof;
Figure 17 is a top perspective view thereof;
Figure 18 is a front perspective view thereof;
Figure 19 is a side perspective view thereof;
Figure 20 is a side perspective view thereof;
Figure 21 is a bottom perspective view thereof;
Figure 22 is a top perspective view thereof;
Figure 23 is a side perspective view thereof;
Figure 24 is a front perspective view thereof;
Figure 25 is a rear perspective view thereof;
Figure 26 is a side perspective view thereof;
Figure 27 is a side view of the embodiment introduced in Figure 1, with elements removed for clarity;
Figure 28 is a side perspective view thereof;
Figure 29 is a side view thereof;
Figure 30 is a side perspective view thereof;
Figure 31 is a side perspective view thereof;
Figure 32 is an exploded side view of the embodiment introduced in Figure 1, with elements removed for clarity;
Figure 33 is a side view thereof;
Figure 34 is a side view thereof;
Figure 35 is a side view thereof;
Figure 36 is a side view thereof;
Figure 37 is a side perspective view of an isolated housing element introduced in Figure 1;
Figure 38 is a side perspective view thereof;
Figure 39 is a side perspective view thereof;
Figure 40 is a side perspective view thereof;
Figure 41 is a side view thereof;
Figure 42 is a side perspective view thereof;
Figure 43 is a side perspective view thereof;
Figure 44 is a side perspective view thereof;
Figure 45 is a side perspective view thereof;
Figure 46 is a side view of an isolated thumb lock element introduced in Figure 1;
Figure 47 is a front view thereof;
Figure 48 is a side perspective view thereof;
Figure 49 is a side perspective view thereof;
Figure 50 is a side perspective view thereof;
Figure 51 is a side view of an isolated inner frame introduced in Figure 1;
Figure 52 is a front perspective view thereof;
Figure 53 is a side perspective view thereof;
Figure 54 is a side perspective view thereof;
Figure 55 is a rear perspective view thereof;
Figure 56 is a side view thereof;
Figure 57 is a front view thereof;
Figure 58 is a top perspective view thereof;
Figure 59 is a bottom perspective view thereof;
Figure 60 is a bottom perspective view thereof; and
Figure 61 is a top perspective view thereof.

### Summary

In accordance with the present disclosure, tape measure device and assemblies are provided for a wide variety of applications. This disclosure provides improved devices and assemblies that are convenient, efficient, and safe for continued use in a variety of measuring applications, and the like.

In one embodiment, a measuring device comprises a retractable measuring tape secured about a tape reel; and an elongated barbed projection assembly coupled in an operative association with said measuring tape, wherein said elongated barbed projection assembly including a length of barbed projection having a plurality of barbs, and wherein said elongated barbed projection assembly being aligned substantially parallel to a longitudinal axis of said measuring tape in a first static storage position and adapted to hinge to a second operating position being substantially perpendicular to a distal end of said measuring tape, whereby a plurality of barbs align substantially perpendicular to said longitudinal axis of said measuring tape.

In certain examples, the tape reel may include a wound spring return and a locking notch. The tape reel may include a mounting end having at least one mounting hole adapted to align with an associated mounting aperture of said elongated barbed projection assembly. The elongated barbed projection assembly may include an upper hinge having a horizontal portion and an adjacent vertical portion. The device may include a horizontal portion having a pull tab, wherein said pull tab including a substantially offset vertical element. The device may include a pair of stop shoulders having corresponding upper hinge openings adapted to receive a pivot pin, and wherein said stop shoulders adapted to secure a barb projection opening therebetween. The elongated barbed projection assembly may include a reinforcement rib.

In one embodiment, a measuring device comprises a split housing supporting a retractable measuring tape in a static state; an elongated barbed projection assembly coupled in an operative association with said measuring tape; and an inner frame secured between said split housing, wherein said inner frame having an externally exposed barb projection pocket adapted to secure said elongated barbed projection assembly.

In certain examples, the split housing includes a first housing having a plurality of finger notch silhouettes. The split housing may include a second housing having a central locking extension. The second housing may include an aft receiving shelf. The second housing may include a fore receiving shelf. The second housing may include a lower rest. The device may include a stop lip. The inner frame may include a tape guide adjacent said barb projection pocket. The device may include a slot within said tape guide adapted to receive a portion of said retractable measuring tape.

In one embodiment, a measuring device comprises a housing supporting a retractable measuring tape, wherein said housing having a front portion exposing an end of said retractable measuring tape and a rear portion; and a thumb lock member substantially moveable along said front portion, and wherein said thumb lock member having a locking indent at an upper end and an opposing lower lip at a lower end.

In certain examples, the thumb lock member may include an inner recessing surface aligned along an upper portion of said thumb lock member, and wherein said inner recessing surface adapted to recess inside a channel of said housing. The thumb lock member may include an inner abutting surface aligned along a lower portion of said thumb lock member, and wherein said inner abutting surface adapted to abut a stop lip of said housing to prevent movement beyond said stop lip. The locking indent may lock into a nub of said housing to define a retractable pressure lock of said thumb lock member about said housing.

In one embodiment, a barbed assembly in communication with a retractable measuring tape comprises an upper hinge having a distal pull tab and a proximate mounting portion secured about the retractable measuring tape; an elongated barbed projection having a plurality of barbs; and a pivot pin pivotally coupling the elongated barbed projection about the upper hinge, wherein the elongated barbed projection pivots substantially ninety degrees about the upper hinge in an operating position.

In one embodiment, in a measuring device having a retractable measuring tape comprises an inner frame having an externally exposed barb projection pocket; and an elongated projection assembly secured about the retractable measuring tape, and wherein the elongated projection assembly having an upper hinge and an elongated barbed projection having at least one barb, and wherein the barb projection pocket adapted to receive the elongated barbed projection in an unhinged static position.

In one example, the inner frame may have a tape guide adjacent the barb projection pocket. The device may include a slot within the tape guide to receive the retractable measuring tape. The inner frame may include a raised fore notch. The inner frame may include a pair of opposing alignment projections. The inner frame may include an aft notch. The inner frame may include a frame opening. The inner frame may include an outer wall opposing the barb projection pocket. The inner frame may include a distal finger notch adapted to align a user's finger and a finger notch adapted to align at least one finger. The inner frame may include a flat seating portion. The elongated barbed projection assembly may include a barbed projection having a plurality of barbs aligned along an inner surface.

In one example, the elongated barbed projection assembly may include a stop tab sidewall. The elongated barbed projection assembly may include at least one reinforcement rib. The elongated barbed projection assembly may include a barb projection opening. The elongated barbed projection assembly may include a pivot pin pivotally coupling the elongated barbed projection about an upper hinge. The elongated barbed projection may pivot substantially ninety degrees in one direction about the upper hinge into an operating position. The elongated barbed projection may grip an external piece. The elongated barbed projection may retain an external piece without sliding off. The elongated barbed projection may retain an external piece in a single hold. The device may include a housing having a raised peripheral rim.

In one embodiment, a measuring device comprises a retractable measuring tape; and an elongated barbed projection assembly coupled in an operative association with the measuring tape, and wherein the elongated barbed projection assembly being aligned substantially parallel to a longitudinal axis of the measuring tape in a first static storage position and adapted to hinge to a second operating position being substantially perpendicular to a distal end of the measuring tape, whereby a plurality of barbs align substantially perpendicular to the longitudinal axis of the measuring tape.

In one example, a retractable measuring tape may be secured about a tape reel. The tape reel may include a wound spring return. The tape reel may include a locking notch. The tape reel may include a mounting end. The mounting end may include at least one mounting hole adapted to align with an associated mounting aperture of the elongated barbed projection assembly. The elongated barbed projection assembly may include an upper hinge having a horizontal portion and an adjacent vertical portion. The horizontal portion may include a plurality of mounting apertures. The horizontal portion may include a pull tab, wherein the pull tab including a substantially offset vertical element. The vertical portion may include a pair of stop shoulders. The stop shoulders may include corresponding upper hinge openings adapted to receive a pivot pin. The stop shoulders may secure a barb projection opening therebetween. The stop shoulders may be offset below the horizontal portion.

In one example, an elongated barbed projection assembly may include a length of barbed projection having a plurality of barbs. The elongated barbed projection assembly may include a stop tab sidewall. The elongated barbed projection assembly may include a reinforcement rib. The elongated barbed projection assembly may include a barb projection opening. The elongated barbed projection assembly may include a pivot pin pivotally coupling an elongated barbed projection about an upper hinge. The elongated barbed projection may pivot substantially ninety degrees in one direction about the upper hinge from the static position into an operating position.

In one embodiment, a measuring device comprises a split housing supporting a retractable measuring tape in a static state; and an inner frame secured between the split housing, wherein the inner frame having an externally exposed barb projection pocket at one end and a plurality of finger notches at an opposing end.

In one example, a split housing may include a first housing having a plurality of finger notch silhouettes. The first housing may include a plurality of mounting holes. The device may include an external clip secured about the first housing. The split housing may include a second housing having a central locking extension. The second housing may include an aft receiving shelf. The second housing may include a plurality of peripheral alignment studs. The second housing may include a guide pin stud adapted to align with a first housing. The second housing may include a fore receiving shelf. The second housing may include a lower rest. The device may include a stop lip. The second housing may include a stud recess.

In one example, an inner frame may include a tape guide adjacent the barb projection pocket. The device may include a slot within the tape guide adapted to receive a portion of the retractable measuring tape. The inner frame may include a raised fore notch adapted to mate with the second housing. The inner frame may include a pair of opposing alignment projections. The inner frame may include an aft notch. The inner frame may include a frame opening. The inner frame may include an outer wall opposing the barb projection pocket. The finger notches may include a distal finger notch adapted to align at least one user's finger and a proximate finger notch adapted to align a user's finger.

In one embodiment, a measuring device comprises a housing supporting a retractable measuring tape, wherein the housing having a front portion exposing an end of the retractable measuring tape and a rear portion; and a thumb lock member substantially moveable along the front portion, and wherein the thumb lock member having a locking indent at an upper end and an opposing lower lip at a lower end.

In one example, a thumb lock member may include an inner recessing surface aligned along an upper portion of the thumb lock member. The inner recessing surface may recess inside a channel of the housing. The thumb lock member may include an inner abutting surface aligned along a lower portion of the thumb lock member. The inner abutting surface may abut a stop lip of the housing to prevent movement beyond the stop lip. The locking indent may lock into a nub of the housing to define a retractable pressure lock of the thumb lock member about the housing. The may include an inner frame having a flat seating portion. The may include a flat receiving portion adapted to align about the flat seating portion. The housing front portion may include a barb projection pocket. The housing front portion may include a stud recess. The housing rear portion may include an aft receiving shelf. The housing rear portion may include a plurality of finger notch silhouettes. The finger notch silhouettes may include a finger notch silhouette. The finger notch silhouettes may include a finger notch silhouette. The finger notch silhouettes may include a two finger notch silhouette.

In one example, a device may include an elongated hinged projection assembly. The hinged projection assembly may include an upper hinge. The hinged projection assembly may include an elongated barbed projection having a plurality of barbs positioned along one surface. The plurality of barbs may secure about a working piece in an operating position. The working piece may include a piece of lumber, a piece of wood, a piece of material, or the like.

In one embodiment, this disclosure includes a variety of methods of assembling a measuring device shown and described herein. The method may include aligning and securing an inner frame about a split housing. The method may include aligning and securing a thumb lock about a housing. The method may include aligning and securing a tape reel about a housing. The method may include aligning and securing an elongated barbed projection assembly about a tape reel.

The above summary was intended to summarize certain embodiments of the present disclosure. Embodiments will be set forth in more detail in the figures and description of embodiments below. It will be apparent, however, that the description of embodiments is not intended to limit the present inventions, the scope of which should be properly determined by the appended claims.

### Description of Embodiments

In the following description, like reference characters designate like or corresponding parts throughout the several views. Also in the following description, it is to be understood that such terms as "forward," "rearward," "left," "right," "upwardly," "downwardly," and the like are words of convenience and are not to be construed as limiting terms.

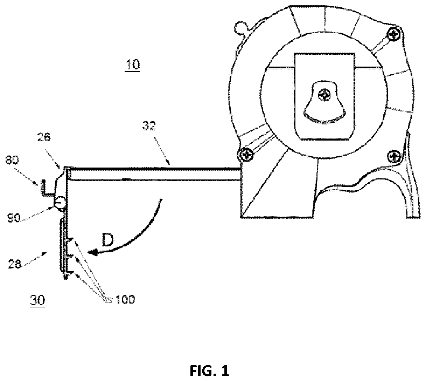

Referring now to the drawings in general, and Figure 1 in particular, it will be understood that the illustrations are for the purpose of describing embodiments of the disclosure and are not intended to limit the disclosure or any inventions thereto. As best seen in Figure 1, measuring device 10 is shown embodied according to the present disclosure to provide improved alignment retainment and efficiency, and the like. Those skilled in the art having the benefit of this disclosure will appreciate any combination of elements and examples herein within the spirit of this disclosure.

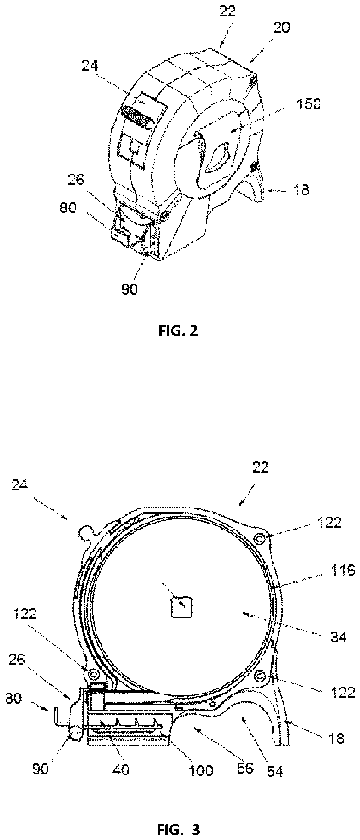

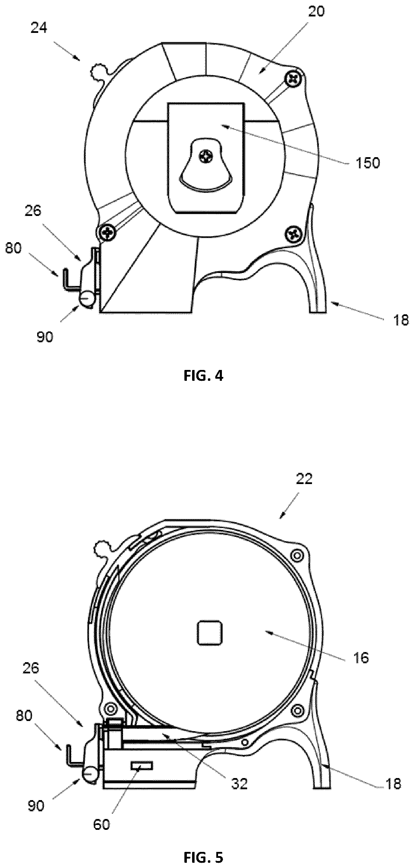

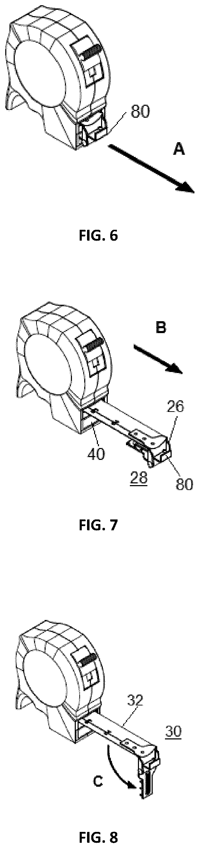

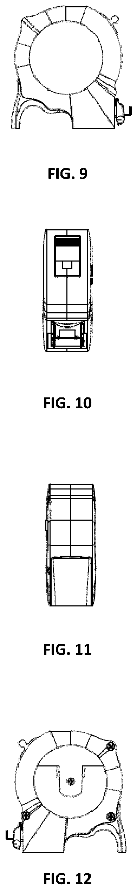

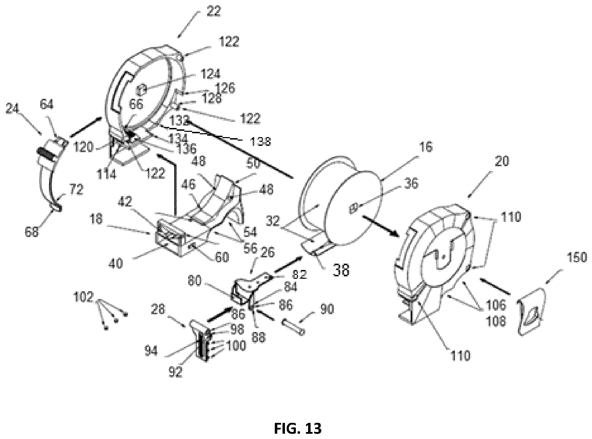

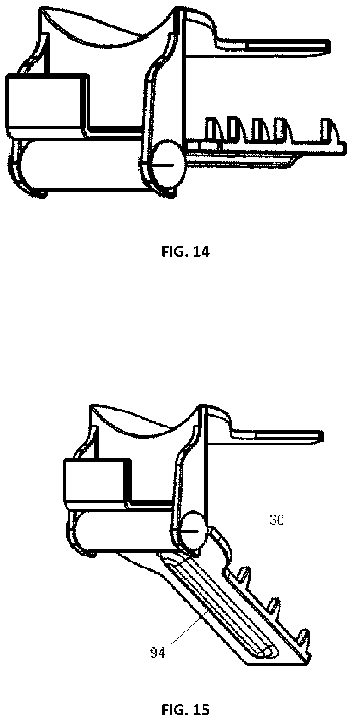

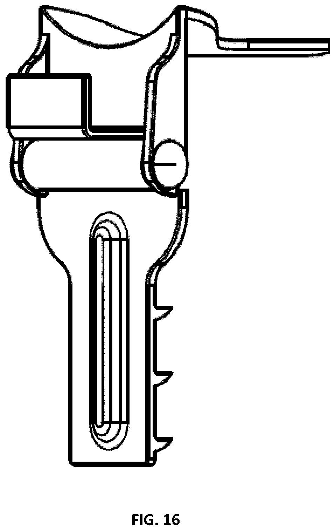

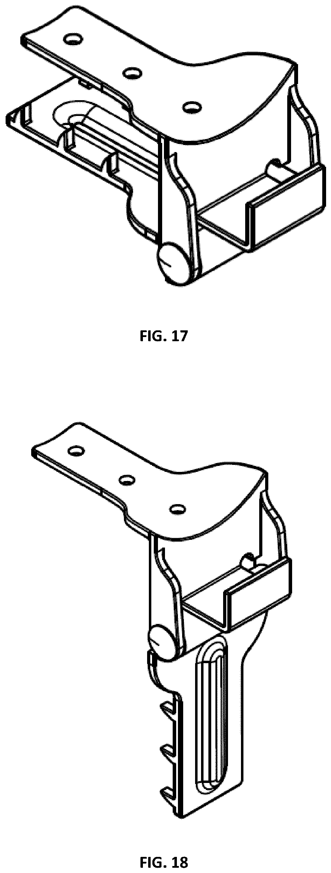

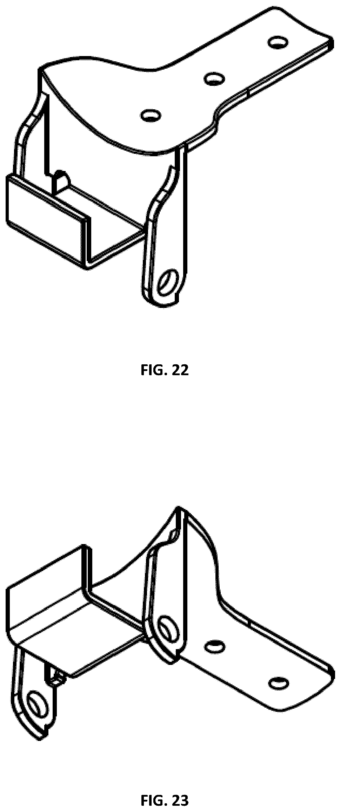

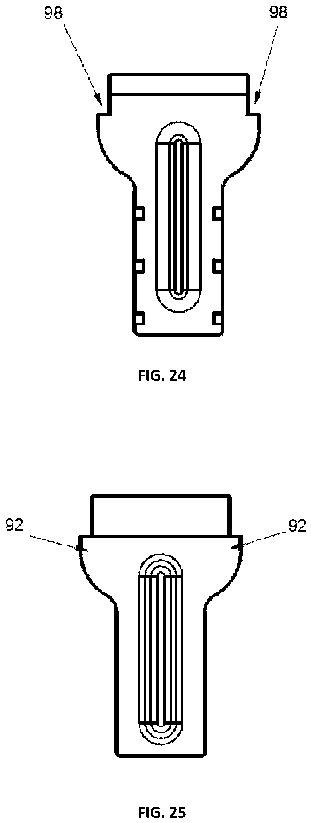

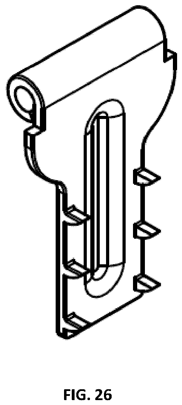

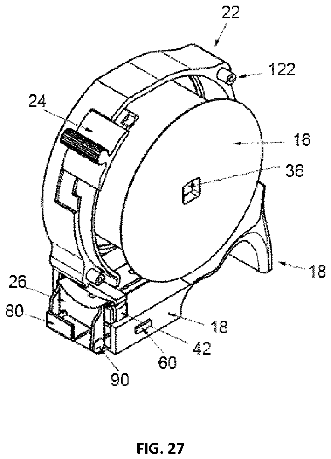

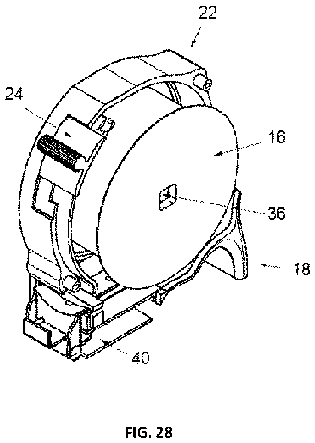

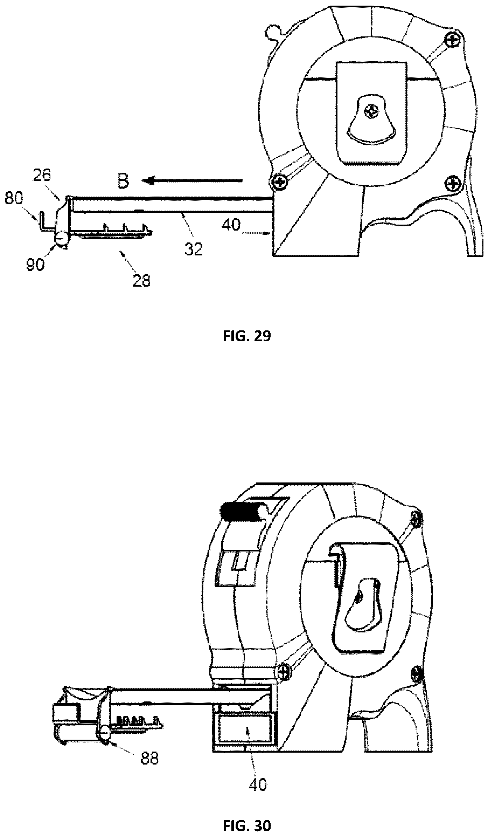

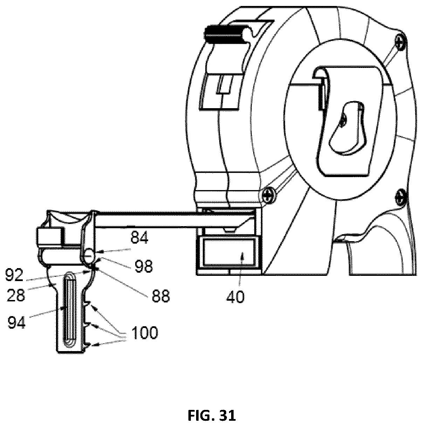

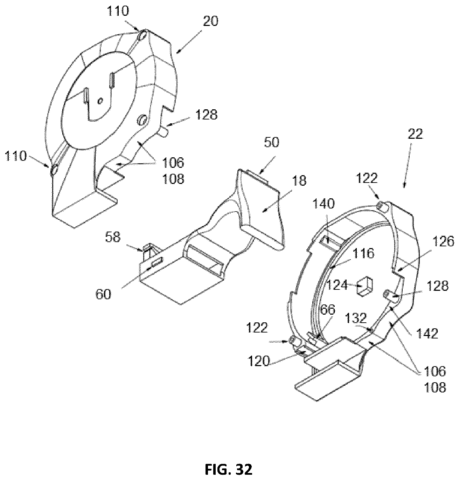

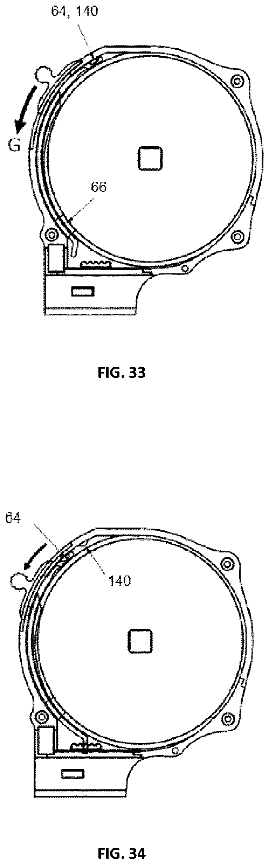

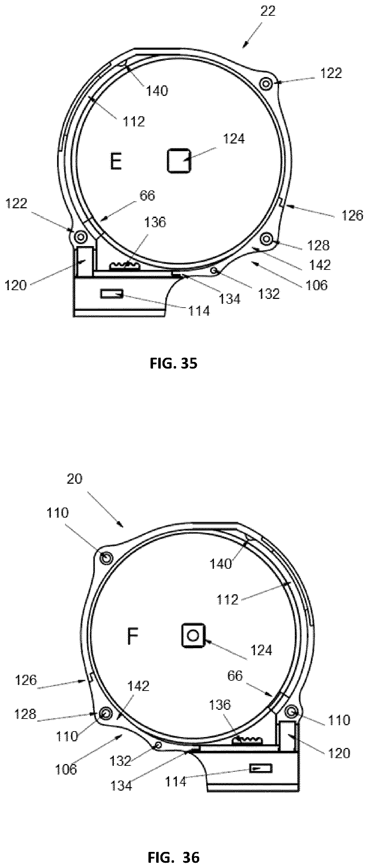

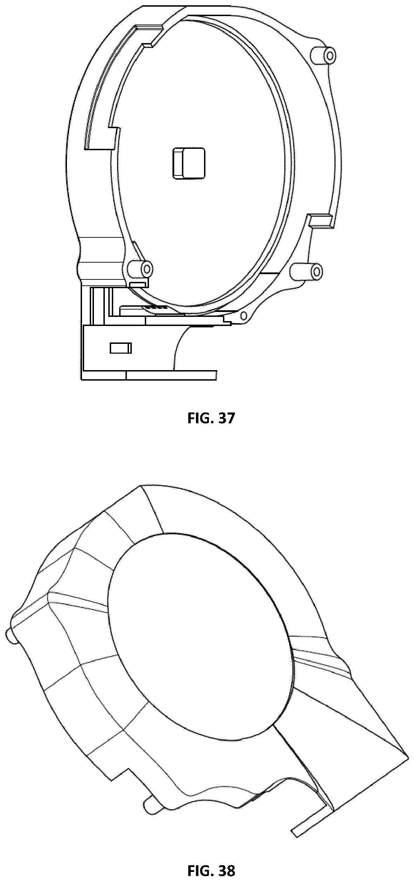

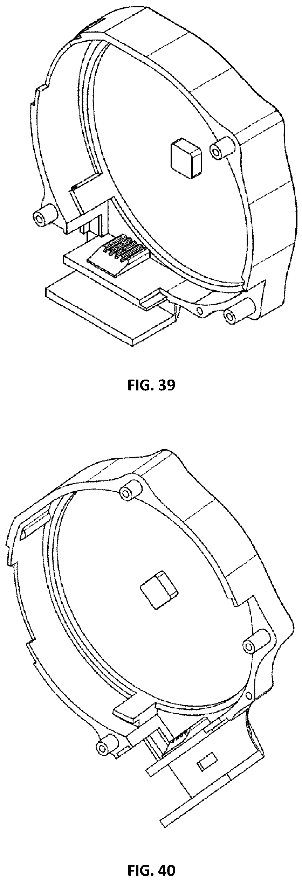

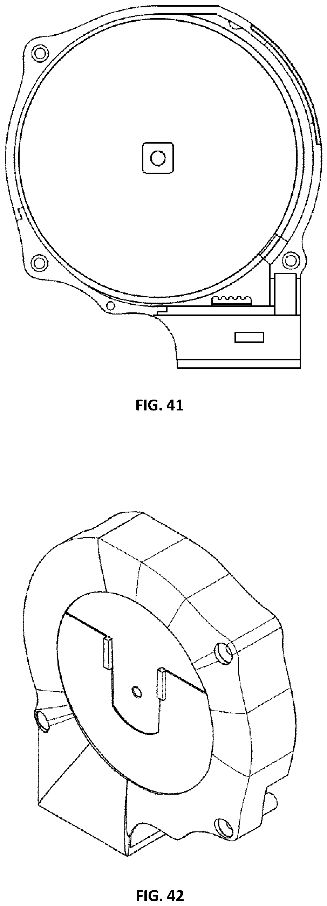

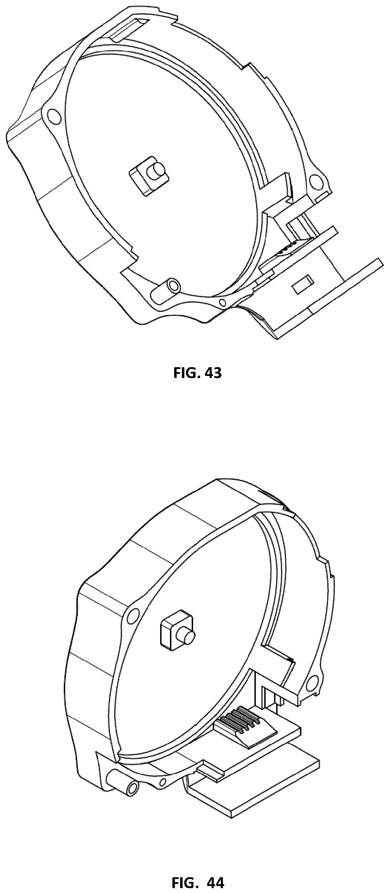

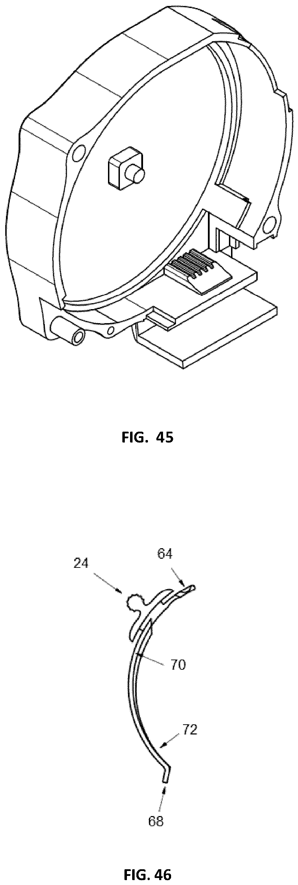

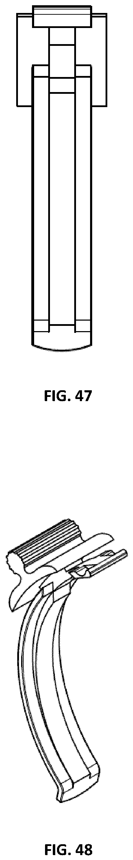

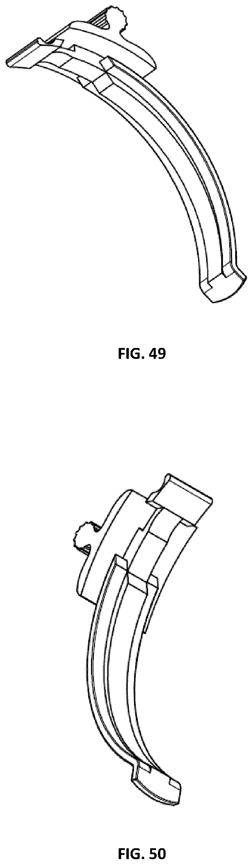

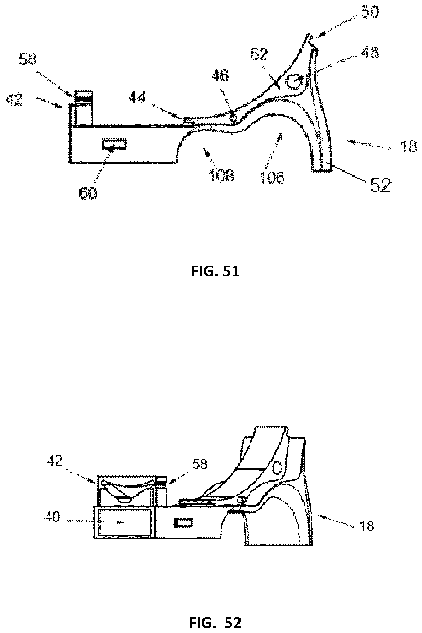

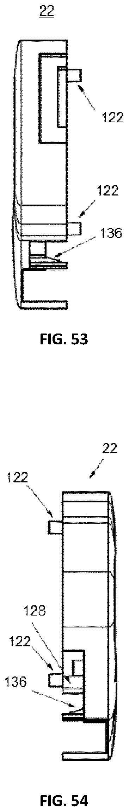

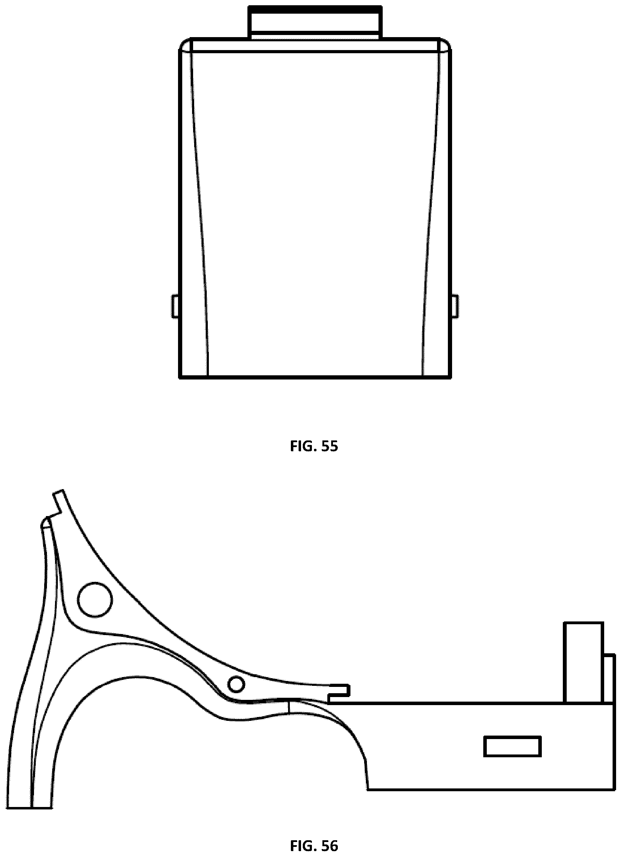

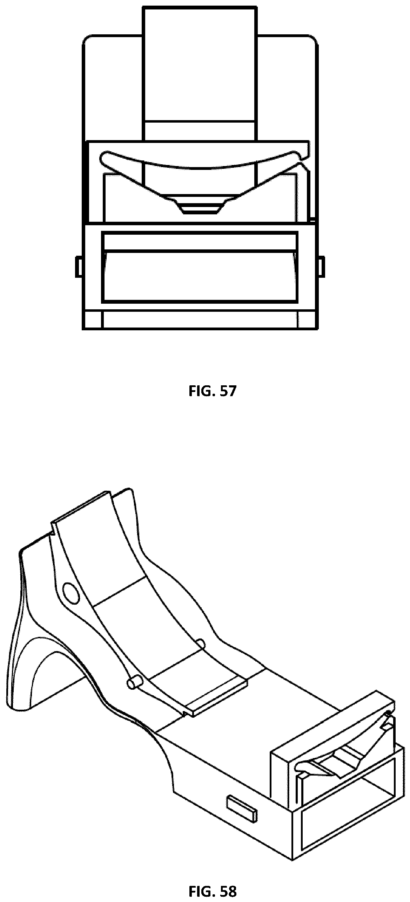

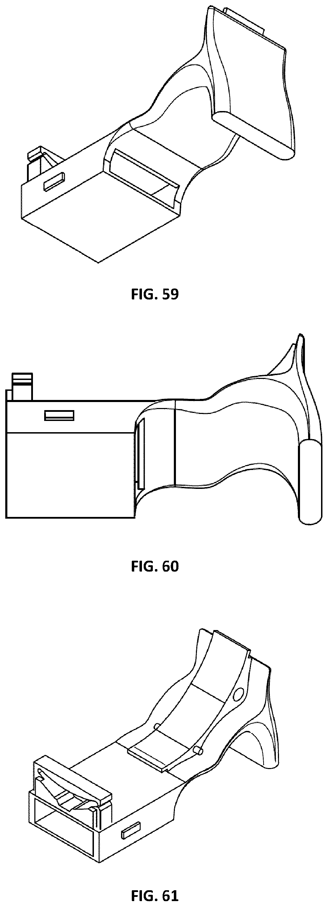

As shown in Figures 1-61, a measuring device may comprise a retractable measuring tape 32; and an elongated barbed projection assembly 30 coupled in an operative association with the measuring tape 32, and wherein the elongated barbed projection assembly 30 being aligned substantially parallel to a longitudinal axis of the measuring tape 32 in a first static storage position and adapted to hinge to a second operating position being substantially perpendicular to a distal end of the measuring tape 32, whereby a plurality of barbs 100 align substantially perpendicular to the longitudinal axis of the measuring tape 32.

In one example, a retractable measuring tape 32 may be secured about a tape reel 16. The tape reel 16 may include a wound spring return 34. The tape reel 16 may include a locking notch 36. The tape reel 16 may include a mounting end. The mounting end may include at least one mounting hole 38 adapted to align with an associated mounting aperture of the elongated barbed projection assembly. The elongated barbed projection assembly may include an upper hinge 26 having a horizontal portion and an adjacent vertical portion. The horizontal portion may include a plurality of mounting apertures 82. The horizontal portion may include a pull tab 80, wherein the pull tab 80 includes a substantially offset vertical element. The vertical portion may include a pair of stop shoulders 84. The stop shoulders 84 may include corresponding upper hinge openings 86 to receive a pivot pin 90, or the like to provide any of the pivot movement shown and described herein. The stop shoulders 84 may secure a barb projection opening therebetween. The stop shoulders 84 may be offset below the horizontal portion.

In one example, an elongated barbed projection assembly may include a length of barbed projection having a plurality of barbs 100. The elongated barbed projection assembly may include a stop tab 88 sidewall 92. The elongated barbed projection assembly may include a reinforcement rib 94. The elongated barbed projection assembly may include a barb projection opening 86. The elongated barbed projection assembly may include a pivot pin 90 pivotally coupling an elongated barbed projection about an upper hinge 26. The elongated barbed projection may pivot substantially ninety degrees, including, but not limited to ninety degrees, in one direction about the upper hinge 26 from the static position into an operating position.

In one embodiment, a barbed assembly 30 in communication with a retractable measuring tape 32 comprises an upper hinge 26 having a distal pull tab 80 and a proximate mounting portion secured about the retractable measuring tape 32; an elongated barbed projection having a plurality of barbs 100; and a pivot pin 90 pivotally coupling the elongated barbed projection about the upper hinge 26, wherein the elongated barbed projection pivots substantially ninety degrees about the upper hinge 26 in an operating position.

In one embodiment, in a measuring device having a retractable measuring tape 32 comprises an inner frame 18 having an externally exposed barb projection pocket 40; and an elongated projection assembly secured about the retractable measuring tape 32, and wherein the elongated projection assembly having an upper hinge 26 and an elongated barbed projection having at least one barb 100, and wherein the barb projection pocket 40 receives the elongated barbed projection in an unhinged static position.

In one example, the inner frame 18 may have a tape guide 42 adjacent the barb projection pocket 40. The device may include a slot 58 within the tape guide 42 adapted to receive the retractable measuring tape 32 in assembly in any of the assembly methods show and described herein. The inner frame 18 may include a raised fore notch 44. The inner frame 18 may include a pair of opposing alignment projections 46. The inner frame 18 may include an aft notch 50. The inner frame 18 may include a frame opening 48. The inner frame 18 may include an outer wall 52 opposing the barb projection pocket 40. The inner frame 18 may include a distal finger notch 54 adapted to align at least one user's finger and an adjacent finger notch adapted to align at least one finger. The inner frame may include a flat seating portion 62. The elongated barbed projection assembly may include a barbed projection having a plurality of barbs 100 aligned along an inner surface.

In one example, the elongated barbed projection assembly may include a stop tab 88 sidewall 92. The elongated barbed projection assembly may include at least one reinforcement rib 94. The elongated barbed projection assembly may include a barb projection opening. The elongated barbed projection assembly may include a pivot pin 90 pivotally coupling the elongated barbed projection about an upper hinge 26. The elongated barbed projection may pivot substantially ninety degrees in one direction about the upper hinge 26 into an operating position. The elongated barbed projection may grip an external piece. The elongated barbed projection may retain an external piece without sliding off. The elongated barbed projection may retain an external piece in a single hold. The device may include a housing having a raised peripheral rim 116.

In one embodiment, a measuring device comprises a split housing supporting a retractable measuring tape 32 in a static state; and an inner frame secured between the split housing, wherein the inner frame having an externally exposed barb projection pocket 40 at one end and a plurality of finger notches at an opposing end.

In one example, a split housing may include a first housing 20 having a plurality of finger notch silhouettes 106, 108. The first housing 20 may include a plurality of mounting holes 110. The device may include an external clip 150 secured about the first housing 20. The split housing may include a second housing 22 having a central locking extension 124. The second housing 22 may include an aft receiving shelf 126. The second housing 22 may include a plurality of peripheral alignment studs 128. The second housing 22 may include a guide pin stud 128 to align with 48 of opposing 20, 22 housing. The second housing 22 may include a fore receiving shelf 134. The second housing 22 may include a lower rest 136. The device may include a stop lip 140. The second housing 22 may include a stud recess 138.

In one example, an inner frame 18 may include a tape guide 42 adjacent the barb projection pocket 40. The device may include a slot 58 within the tape guide 42 adapted to receive a portion of the retractable measuring tape 32 for alignment in any of the assembly methods shown and described herein. The inner frame 18 may include a raised fore notch 44 adapted to mate with the housing 20, 22. The inner frame 18 may include a pair of opposing alignment projections 46. The inner frame 18 may include an aft notch 50. The inner frame 18 may include a frame opening 48. The inner frame 18 may include an outer wall 52 opposing the barb projection pocket 40. The finger notches may include a distal finger notch 54 adapted to align at least one user's finger and a proximate finger notch 56 adapted to align a user's finger.

In one embodiment, a measuring device comprises a housing supporting a retractable measuring tape 32, wherein the housing having a front portion exposing an end of the retractable measuring tape 32 and a rear portion; and a thumb lock 24 member substantially moveable along the front portion, and wherein the thumb lock 24 member having a locking indent at an upper end and an opposing lower lip 66 at a lower end.

In one example, a thumb lock 24 member may include an inner recessing surface 70 aligned along an upper portion of the thumb lock 24 member. The inner recessing surface 70 may recess inside a channel of the housing. The thumb lock 24 member may include an inner abutting surface 72 aligned along a lower portion of the thumb lock 24 member. The inner abutting surface 72 may abut a stop lip 148 of the housing to prevent movement beyond the stop lip 140. The locking indent may lock into a nub of the housing to define a retractable pressure lock of the thumb lock 24 member about the housing. The may include an inner frame 18 having a flat seating portion 62. The may include a flat receiving portion 142 adapted to align about the flat seating portion 62. The housing front portion may include a barb projection pocket 40. The housing front portion may include a stud recess 138. The housing rear portion may include an aft receiving shelf 126. The housing rear portion may include a plurality of finger notch silhouettes 106, 108. The finger notch silhouettes 106, 108 may include a finger notch silhouette. The finger notch silhouettes 106, 108 may include a finger notch silhouette. The finger notch silhouettes 106, 108 may include a two finger notch silhouette.

In one example, a device may include an elongated hinged projection assembly. The hinged projection assembly may include an upper hinge 26. The hinged projection assembly may include an elongated barbed projection having a plurality of barbs 100 positioned along one surface. The plurality of barbs 100 may secure about a working piece in an operating position. The working piece may include a piece of lumber, a piece of wood, a piece of material, or the like.

In one embodiment, this disclosure includes a variety of methods of assembling a measuring device shown and described herein. The method may include aligning and securing an inner frame 18 about a split housing. The method may include aligning and securing a thumb lock 24 about a housing. The method may include aligning and securing a tape reel 16 about a housing. The method may include aligning and securing an elongated barbed projection assembly about a tape reel 16.

As illustrated in the various cut-out figures and isolated elements, in its static state with tape reel recessed, the hinged/ barbed tip, having the barbed section 28, may be protected inside its housing. As shown throughout, the section 28 is visible with the end sidewall of barb pocket cut away so as to see how the section 28 positioned inside pocket 40. In use, a user may pulls the pull tab 80 of the upper hinge 26 in the direction of arrow A. This pulls out the measuring tape 32. This pull motion now seen as arrow B reveals the barb projection 28 from its pocket 40. Once the motion of arrow A, the user may then un-hinge the barb projection 28 as seen in the direction of arrow C. Now the barb projection 28 is in its place having followed the direction arrow D.

In certain examples, barb projection 28 is used to grab into any of the work piece items shown and described herein needing to be measured without letting go or sliding off causing the end of the tape measure to reel back in and cause the operator to have to walk back to the end of the item (for instance, but not limited to, a log) and re-set the end of the tape measure and proceed to again walk back to the desired distance the operator wishes to measure. Unexpectedly, the invention with its upper hinge section 26 and barb projection 28 pivoting about pin 90 creates a much longer hook to allow the operator to firmly attach the barbed section 28 with barbs 100 into the work piece, for instance for a more stable and solid retention of the tape measure end to the item being measured.

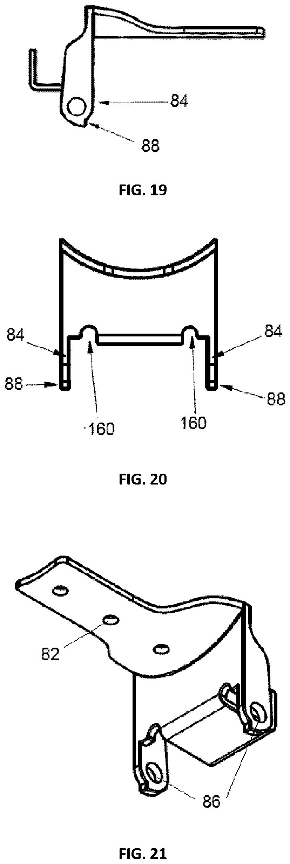

As shown, area 62 on thumb lock 24 rides inside channel 112 of housing 20 and 22, and area 72 of thumb lock 24 rides against the inside of a lip 66 to prevent escaping beyond lip 66 when being pushed in direction of arrow G. As shown, locking detent 64 at upper end of thumb lock 24 locks into nub 140 inside housings 20 and 22. As shown, thumb lock 24 may be pushed in direction of arrow G unlocked and then detent 64 is no longer locked into nub 140. For example, 64 and 140 may operate as a pressure type lock, wherein the force from the thumb motion arrow G Fig. 20 overtakes the locking ability and 64 rides over the round shape of 140.

Further, those skilled in the art having the benefit of this disclosure will recognize additional alignment and functional features and elements useful for the examples and embodiments herein.

Numerous characteristics and advantages have been set forth in the foregoing description, together with details of structure and function. Many of the novel features are pointed out in the appended claims. The disclosure, however, is illustrative only, and changes may be made in detail, especially in matters of shape, size, and arrangement of parts, within the principle of the disclosure, to the full extent indicated by the broad general meaning of the terms in which the general claims are expressed. It is further noted that, as used in this application, the singular forms "a," "an," and "the" include plural referents unless expressly and unequivocally limited to one referent.

### Representative features

1. A measuring device comprising:
   a retractable measuring tape; and
   an elongated barbed projection assembly coupled in an operative association with said measuring tape,
   preferably wherein said elongated barbed projection assembly being aligned substantially parallel to a longitudinal axis of said measuring tape in a first static storage position and adapted to hinge to a second operating position being substantially perpendicular to a distal end of said measuring tape, whereby a plurality of barbs align substantially perpendicular to said longitudinal axis of said measuring tape.
2. The device of Clause 1, wherein said retractable measuring tape secured about a tape reel.
3. The device of Clause 2, wherein said tape reel including a wound spring return.
4. The device of Clause 2 or 3, wherein said tape reel including a locking notch.
5. The device of any of Clauses 2 to 4, wherein said tape reel including a mounting end.
6. The device of Clause 5 wherein said mounting end including at least one mounting hole adapted to align with an associated mounting aperture of said elongated barbed projection assembly.
7. The device of any preceding clause, wherein said elongated barbed projection assembly including an upper hinge having a horizontal portion and an adjacent vertical portion.
8. The device of Clause 7, wherein said horizontal portion having a plurality of mounting apertures.
9. The device of Clause 7 or 8, wherein said horizontal portion having a pull tab, wherein said pull tab including a substantially offset vertical element.
10. The device of any of Clauses 7 to 9, wherein said vertical portion having a pair of stop shoulders.
11. The device of Clause 10, wherein said stop shoulders having corresponding upper hinge openings adapted to receive a pivot pin.
12. The device of Clause 10 or 11, wherein said stop shoulders adapted to secure a barb projection opening therebetween.
13. The device of any of Clauses 10 to 12, wherein said stop shoulders are offset below said horizontal portion.
14. The device of any preceding clause, wherein said elongated barbed projection assembly including a length of barbed projection having a plurality of barbs.
15. The device of any preceding clause, wherein said elongated barbed projection assembly including a stop tab sidewall.
16. The device of any preceding clause, wherein said elongated barbed projection assembly including a reinforcement rib.
17. The device of any preceding clause, wherein said elongated barbed projection assembly
   including a barb projection opening.
18. The device of any preceding clause, wherein said elongated barbed projection assembly including a pivot pin pivotally coupling an elongated barbed projection about an upper hinge.
19. The device of Clause 18, wherein said elongated barbed projection pivots substantially ninety degrees in one direction about said upper hinge from said static position into an operating position.
20. A measuring device comprising:
   a split housing supporting a retractable measuring tape in a static state; and
   an inner frame secured between said split housing, wherein said inner frame having an externally exposed barb projection pocket, preferably wherein the barb protection pocket is at one end and a plurality of finger notches are at an opposing end, and/or an elongated barbed projection assembly is coupled in an operative association with said measuring tape.
21. The device of Clause 20, wherein said split housing includes a first housing having a plurality of finger notch silhouettes.
22. The device of Clause 21, wherein said first housing having a plurality of mounting holes.
23. The device of Clause 21 or 22, including an external clip secured about said first housing.
24. The device of any of Clauses 20 to 23, wherein said split housing includes a second housing, preferably having a central locking extension.
25. The device of Clause 24, wherein said second housing having an aft receiving shelf.
26. The device of Clause 24 or 25, wherein said second housing having a plurality of peripheral alignment studs.
27. The device of any of Clauses 24 to 26, wherein said second housing having a guide pin stud adapted to align with a first housing.
28. The device of any of Clauses 24 to 27, wherein said second housing having a fore receiving shelf.
29. The device of any of Clauses 24 to 28 wherein said second housing having a lower rest.
30. The device of any of Clauses 20 to 29, including a stop lip.
31. The device of any of Clauses 24 to 30, wherein said second housing having a stud recess.
32. The device of any of Clauses 20 to 31, wherein said inner frame having a tape guide adjacent said barb projection pocket.
33. The device of Clause 32, including a slot within said tape guide adapted to receive a portion of said retractable measuring tape.
34. The device of any of Clauses 20 to 33, wherein said inner frame having a raised fore notch adapted to mate with said second housing.
35. The device of any of Clauses 20 to 34, wherein said inner frame having a pair of opposing alignment projections.
36. The device of any of Clauses 20 to 35, wherein said inner frame having an aft notch.
37. The device of any of Clauses 20 to 36, wherein said inner frame having a frame opening.
38. The device of any of Clauses 20 to 37, wherein said inner frame having an outer wall opposing said barb projection pocket.
39. The device of any of Clauses 20 to 38, wherein said finger notches include a distal finger notch adapted to align at least one user's finger and a proximate finger notch adapted to align a user's finger.
40. A measuring device comprising:
   a housing supporting a retractable measuring tape, wherein said housing having a front portion exposing an end of said retractable measuring tape and a rear portion; and, preferably, a thumb lock member substantially moveable along said front portion, preferably wherein said thumb lock member having a locking indent at an upper end and an opposing lower lip at a lower end.
41. The device of Clause 40, wherein said thumb lock member including an inner recessing surface aligned along an upper portion of said thumb lock member.
42. The device of Clause 41, wherein said inner recessing surface adapted to recess inside a channel of said housing.
43. The device of any of Clauses 40 to 42, wherein said thumb lock member including an inner abutting surface aligned along a lower portion of said thumb lock member.
44. The device of Clause 43, wherein said inner abutting surface adapted to abut a stop lip of said housing to prevent movement beyond said stop lip.
45. The device of any of Clauses 40 to 45, wherein said locking indent adapted to lock into a nub of said housing to define a retractable pressure lock of said thumb lock member about said housing.
46. The device of any of Clauses 40 to 45, including an inner frame having a flat seating portion.
47. The device of Clause 46, including a flat receiving portion adapted to align about said flat seating portion.
48. The device of any of Clauses 40 to 47, wherein said housing front portion including a barb projection pocket.
49. The device of any of Clauses 40 to 48, wherein said housing front portion including a stud recess.
50. The device of any of Clauses 40 to 49, wherein said housing rear portion including an aft receiving shelf.
51. The device of any of Clauses 40 to 50, wherein said housing rear portion including a plurality of finger notch silhouettes.
52. The device of Clause 51, wherein said finger notch silhouettes including a finger notch silhouette.
53. The device of Clause 51, wherein said finger notch silhouettes including a finger notch silhouette.
54. The device of Clause 53, wherein said finger notch silhouettes including a two finger notch silhouette.
55. The device of any of Clauses 40 to 54, including an elongated hinged projection assembly.
56. The device of Clause 55, wherein said hinged projection assembly including an upper hinge.
57. The device of Clause 55 or 56, wherein said hinged projection assembly including an elongated barbed projection having a plurality of barbs positioned along one surface.
58. The device of Clause 57, wherein said plurality of barbs adapted to secure about a working piece in an operating position.
59. The device of Clause 58, wherein said working piece comprises a piece of lumber, a piece of wood, a piece of material, or the like.
60. In a measuring device having a retractable measuring tape, an assembly comprising:
   an inner frame having an externally exposed barb projection pocket; and
   an elongated projection assembly secured about said retractable measuring tape, preferably wherein said elongated projection assembly having an upper hinge and an elongated barbed projection having at least one barb, and wherein
   said barb projection pocket adapted to receive said elongated barbed projection in an unhinged static position.
61. The device of Clause 60, wherein said inner frame having a tape guide adjacent said barb projection pocket.
62. The device of Clause 60 or 61, including a slot within said tape guide adapted to receive said retractable measuring tape.
63. The device of any of Clauses 60 to 62, wherein said inner frame having a raised fore notch.
64. The device of any of Clauses 60 to 63, wherein said inner frame having a pair of opposing alignment projections.
65. The device of any of Clauses 60 to 64, wherein said inner frame having an aft notch.
66. The device of any of Clauses 60 to 65, wherein said inner frame having a frame opening.
67. The device of any of Clauses 60 to 66, wherein said inner frame having an outer wall opposing said barb projection pocket.
68. The device of any of Clauses 60 to 67, wherein said inner frame including a distal finger notch adapted to align at least one user's finger and a finger notch adapted to align at least one finger.
69. The device of any of Clauses 60 to 68, wherein said inner frame having a flat seating portion.
70. The device of any of Clauses 60 to 69, wherein said elongated barbed projection assembly including a barbed projection having a plurality of barbs aligned along an inner surface.
71. The device of any of Clauses 60 to 70, wherein said elongated barbed projection assembly including a stop tab sidewall.
72. The device of any of Clauses 60 to 71, wherein said elongated barbed projection assembly including at least one reinforcement rib.
73. The device of any of Clauses 60 to 72, wherein said elongated barbed projection assembly including a barb projection opening.
74. The device of any of Clauses 60 to 73, wherein said elongated barbed projection assembly including a pivot pin pivotally coupling said elongated barbed projection about an upper hinge.
75. The device of Clause 74, wherein said elongated barbed projection pivots substantially ninety degrees in one direction about said upper hinge into an operating position.
76. The device of any of Clauses 60 to 75, wherein said elongated barbed projection adapted to grip an external piece.
77. The device of any of Clauses 60 to 76, wherein said elongated barbed projection adapted to retain an external piece without sliding off.
78. The device of any of Clauses 60 to 77, wherein said elongated barbed projection adapted to retain an external piece in a single hold.
79. The device of any of Clauses 60 to 78, including a housing having a raised peripheral rim.
80. A barbed assembly in communication with a retractable measuring tape, said barbed assembly comprising:
   an upper hinge, preferably having a distal pull tab and a proximate mounting portion secured about said retractable measuring tape;
   an elongated barbed projection having a plurality of barbs; and
   preferably, a pivot pin pivotally coupling said elongated barbed projection about said upper hinge, wherein said elongated barbed projection pivots substantially ninety degrees about said upper hinge in an operating position.
81. A method of assembling a measuring device shown and described herein.
82. The method of Clause 81, including aligning and securing an inner frame about a split housing.
83. The method of Clause 81 or 82, including aligning and securing a thumb lock about a housing.
84. The method of any of Clauses 81 to 83, including aligning and securing a tape reel about a housing.
85. The method of any of Clauses 81 to 84, including aligning and securing an elongated barbed projection assembly about a tape reel.

## Claims

1. A measuring device comprising:
a. a split housing supporting a retractable measuring tape in a static state;
b. an elongated barbed projection assembly coupled in an operative association with said measuring tape; and
c. an inner frame secured between said split housing, wherein said inner frame having an externally exposed barb projection pocket adapted to secure said elongated barbed projection assembly.

2. The device of Claim 1, wherein said split housing includes a first housing having a plurality of finger notch silhouettes.

3. The device of Claim 1 or 2, wherein said split housing includes a second housing having a central locking extension.

4. The device of Claim 3, wherein said second housing having an aft receiving shelf.

5. The device of Claim 3 or 4, wherein said second housing having a fore receiving shelf.

6. The device of any of Claims 3 to 5, wherein said second housing having a lower rest.

7. The device of any preceding claim, including a stop lip.

8. The device of any preceding claim, wherein said inner frame having a tape guide adjacent said barb projection pocket.

9. The device of Claim 8, including a slot within said tape guide adapted to receive a portion of said retractable measuring tape.

10. A measuring device comprising:
a. a retractable measuring tape secured about a tape reel; and
b. an elongated barbed projection assembly coupled in an operative association with said measuring tape, wherein said elongated barbed projection assembly including a length of barbed projection having a plurality of barbs, and
wherein said elongated barbed projection assembly being aligned substantially parallel to a longitudinal axis of said measuring tape in a first static storage position and adapted to hinge to a second operating position being substantially perpendicular to a distal end of said measuring tape, whereby a plurality of barbs align substantially perpendicular to said longitudinal axis of said measuring tape.

11. The device of Claim 10, wherein said tape reel including a wound spring return and a locking notch.

12. The device of Claim 10 or 11, wherein said tape reel including a mounting end having at least one mounting hole adapted to align with an associated mounting aperture of said elongated barbed projection assembly.

13. The device of any of Claims 10 to 12, wherein said elongated barbed projection assembly including an upper hinge having a horizontal portion and an adjacent vertical portion.

14. The device of Claim 13, wherein said horizontal portion having a pull tab,
wherein said pull tab including a substantially offset vertical element.

15. The device of any of Claims 10 to 14, including a pair of stop shoulders having corresponding upper hinge openings adapted to receive a pivot pin, and wherein said stop shoulders adapted to secure a barb projection opening therebetween.
